Europäisches Patentamt

(19) **European Patent Office**

**Office européen des brevets**

(11) Numéro de publication: **0 004 488**

**B1**

(12) **FASCICULE DE BREVET EUROPEEN**

(45) Date de publication du fascicule de brevet: **04.11.81**

(51) Int. Cl.³: **C 04 B 41/22**

(21) Numéro de dépôt: **79400105.7**

(22) Date de dépôt: **21.02.79**

(54) **Procédé et composition de traitement d'éléments de construction tels que mur de pierre.**

(30) Priorité: **23.02.78 FR 7805806**

(43) Date de publication de la demande:
**03.10.79 Bulletin 79/20**

(45) Mention de la délivrance du brevet:
**04.11.81 Bulletin 81/44**

(84) Etats Contractants Désignés:
**BE CH DE GB IT NL SE**

(56) Documents cités:
**DE - B - 1 001 177**
**FR - A - 1 407 617**
**FR - A - 2 134 181**
**FR - A - 2 386 502**
**US - A - 3 900 622**

(73) Titulaire: **Pascau, Jean-Maurice**
**22, rue Pelleport**
**F-33800 Bordeaux (FR)**

(72) Inventeur: **Pascau, Jean-Maurice**
**22, rue Pelleport**
**F-33800 Bordeaux (FR)**

(74) Mandataire: **Hasenrader, Hubert**
**Cabinet BEAU DE LOMENIE 55, rue d'Amsterdam**
**F-75008 Paris (FR)**

Courier Press, Leamington Spa, England.

Procédé et composition de traitement d'éléments de construction tels que mur de pierre

La présente invention concerne un procédé de traitement d'élément de construction tels que mur de pierre naturelle ou artificielle, de béton, de briques ou enduits de revêtement, vis à vis notamment de dégradations par l'humidité et les agents de corrosion, le procédé consistant à enduire ledit élément au moyen d'une composition comprenant au moins de l'eau, un latex, et un agent mouillant.

L'invention concerne également une composition pour la mise en oeuvre de ce procédé.

On connait déjà par le brevet français 1 407 617 un procédé de traitement d'éléments de construction consistant à enduire les éléments à l'aide d'une peinture au latex, pouvant contenir, outre le latex, des sels d'ammonium et des agents mouillants. Une telle peinture, utilisée essentiellement pour recouvrir des tuiles en ciment, ne permet toutefois pas d'obtenir un effet de reconstitution des pierres susceptibles d'être traitées à l'aide d'une telle composition.

On connait également par la demande de brevet français 2 134 181 un procédé de traitement de murs atteints de salpêtre au moyen de chlorure de calcium en solution dans l'eau. Ce document ne préconise toutefois pas d'utiliser un latex et un agent tensio-actif en combinaison avec le chlorure de calcium.

Le brevet allemand 1 001 177 décrit le traitement anti-efflorescences d'une plaque d'amiante ciment au moyen d'une composition contenant 70% d'eau, 25% de caoutchouc synthétique émulsionné, 4% de bicarbonate de sodium et 1% d'huile de silicone. Une telle composition ne s'est pas non plus avérée suffisamment satisfaisante pour réaliser une protection efficace des éléments de construction traités, et notamment pour permettre la reconstruction de pierres telles que des pierres ravalées par exemple.

L'invention a notamment pour but de proposer une composition permettant un traitement efficace et en profondeur d'élément de construction.

Ce but est atteint, conformément à l'invention, du fait que l'on utilise pour l'enduction une composition comprenant à la fois de l'eau, un latex, du chlorure de calcium et un agent tensio-actif.

Le chlorure de calcium $Cl_2Ca$ constitue un agent floculant du latex et contribue à empêcher la corrosion de la pierre par le gaz carbonique $CO_2$ ou l'oxyde de carbone CO de l'air en transformant des bicarbonates solubles dans l'eau en carbonates insolubles. Le latex forme, dans une zone superficielle de la pierre, une croûte empêchant l'oxydation ou la corrosion de cette pierre; ce latex constitue un hydrofuge empêchant l'eau, l'humidité ou tout produit aqueux, de pénétrer dans la pierre. L'agent tensio-actif permet aux autres constituants en milieu aqueux ($Cl_2Ca$, latex) de remplir leur rôle mentionné ci-dessus. Ainsi, cette association de trois constituants en milieux aqueux constitue un produit de traitement efficace et durable contre le salpêtre, de murs et autres éléments de construction du type susmentionné.

Avantageusement, la composition contient de l'eau, à raison de 70 à 80 parties en poids, un latex, à raison de 10 à 20 parties en poids sec, du chlorure de calcium, à raison de 7 à 13 parties en poids, et un agent tensio-actif, à raison de 0,1 à 3 parties en poids.

Avantageusement, on utilise environ un litre de la composition pour 3m2 de surface d'élément de construction à traiter.

Avantageusement, le tensio-actif est choisi parmi les produits suivants: un ammonium quaternaire; une époxyde.

Avantageusement, le latex est un caoutchouc naturel ou synthétique.

Avantageusement, la composition utilisée contient, en poids, 75 parties d'eau, 10 à 20 parties de latex, 10 parties de chlorure de calcium, et 0,2 à 2 parties d'un ammonium quaternaire.

On préfère utiliser, en tant qu'agent tensio-actif, de l'ammonium quaternaire car ce dernier produit joue également de rôle d'agent de cationsation du latex favorisant l'adhésion du latex sur le corps à traiter.

L'ammonium quaternaire qui peut être du chlorure de benzyl pyridinium constitue également un antiseptique à longue durée d'activité et un agent désodorisant.

La composition selon l'invention est incolore, de sorte qu'elle permet le traitement d'un mur sans que ce dernier change de couleur.

Ainsi, cette composition restitue son calcium à la pierre, assèche et restructure cette pierre en profondeur, la protège contre les agents extérieurs tout en lui laissant son aspect extérieur.

Cette composition est applicable notamment au traitement de murs en briques, plâtre, ciment, argile, torchis, agglomérés, béton cellulaire et autre. Le mûrissement a lieu en 24 heures.

L'invention peut être utilisée à la rénovation de vieux murs salpêtreux, ou pour la protection de murs fraîchement ravalés.

On donne ci-après deux exemples de composition selon l'invention.

| | parties en poids | | | |
|---|---|---|---|---|
| | Eau | Latex | CaCl$_2$ | Agent tensioactif |
| Exemple 1 | 80 | 11 (L) | 7 | 2 (T$_1$) |
| Exemple 2 | 72 | 15 (L) | 10 | 3 (T$_2$) |

L = latex commercialisé par HOECHST sous la référence "MOUVITON M 300".

T$_1$ = ammonium quaternaire commercialisé sous la référence "BARQUAT LB–50" (chlorure de lauryldiméthyl-benzylammonium).

T$_2$ = ammonium quaternaire commercialisé sous le référence "BARDAC 22" (chlorure de didécyldiméthylammonium).

Le chlorure de calcium utilisé est commercialisé par la Société SOLVAY et il se présente sous forme de paillettes.

L'ammonium quaternaire et/ou le chlorure de calcium est/sont, de préférence, rajoutés aux autres constituants au moment de l'emploi.

**Revendications**

1. Procédé de traitement d'élément de construction tels que mur de pierre naturelle ou artificielle, de béton, de briques ou enduits de revêtement, vis à vis notamment de dégradations par l'humidité et les agents de corrosion, le procédé consistant à enduire ledit élément au moyen d'une composition comprenant au moins de l'eau, un latex, et un agent mouillant caractérisé en ce que l'on utilise pour l'enduction une composition comprenant à la fois de l'eau, un latex, du chlorure de calcium et un agent tensio-actif.

2. Procédé selon la revendication 1, caractérisé en ce que la composition contient de l'eau, à raison de 70 à 80 parties en poids, un latex à raison de 10 à 20 parties en poids sec, du chlorure de calcium, à raison de 7 à 13 parties en poids, et un agent tensio-actif, à raison de 0,1 à 3 parties en poids.

3. Procédé selon l'une quelconque des revendications 1 et 2, caractérisé en ce qu'on utilise environ un litre de la composition pour 3m2 de surface d'élément de construction à traiter.

4. Procédé selon l'une quelconque des revendications 1 à 3, caractérisé en ce que l'agent tensio-actif est un ammonium quaternaire.

5. Procédé selon l'une quelconque des revendications 1 à 3, caractérisé en ce que l'agent tensio-actif est une époxyde.

6. Procédé selon l'une des revendications 1 à 5, caractérisé en ce que le latex est un caoutchouc naturel ou synthétique.

7. Procédé selon l'une quelconque des revendications 1 à 6, caractérisé en ce que la composition utilisée contient, en poids, 75 parties en poids d'eau, 10 à 20 parties en poids de latex, 10 parties en poids de chlorure de calcium, et 0,2 à 2 parties en poids d'un quaternaire.

8. Composition anti-salpêtre telle que définie par les revendications 1, 2 et 4 à 7.

**Claims**

1. Treatment method for building elements such as walls in natural or artificial stone, concrete, bricks or finishing coats, against in particular degradations through damp and corroding agents, which method consists in coating the said element with a composition containing at least water, a latex and a wetting agent, characterised in that the coating composition used contains all together water, a latex, calcium chloride, and a surface-active agent.

2. Method according to claim 1, characterised in that the composition contains water at the rate of 70 to 80 parts by weight, a latex at the rate of 10 to 20 parts by dry weight, calcium chloride at the rate of 7 to 13 parts by weight, and a surface-active agent at the rate of 0.1 to 3 parts by weight.

3. Method according to any one of claims 1 and 2, characterised in that about one litre of the composition is used for 3 m2 of surface of building element to be treated.

4. Method according to any one of claims 1 to 3, characterised in that the surface-active agent is a quarternary ammonium.

5. Method according to any one of claims 1 to 3, characterised in that the surface-active agent is an epoxy.

6. Method according to one of claims 1 to 5, characterised in that the latex is a natural or synthetic rubber.

7. Method according to any one of claims 1 to 6, characterised in that the composition used contains, by weight, 75 parts by weight of water, 10 to 20 parts by weight of latex, 10 parts by weight of calcium chloride, and 0.2 to 2 parts by weight of a quarternary ammonium.

8. Anti-salpeter composition such as defined in claims 1, 2, and 4 to 7.

## Patentansprüche

1. Verfahren zur Behandlung von Bauelementen wie Mauern aus Natur- oder Kunststein, Beton, Ziegeln oder Überzugsschichten, besonders gegen den Verfall durch Feuchtigkeit und Korrosionsmittel, wobei das Verfahren aus dem Überziehen des genannten Bauelements mittels einer Verbindung besteht, welche mindestens Wasser, ein Latex und ein Netzmittel enthält, dadurch gekennzeichnet, dass man für das Überziehen eine Verbindung benutzt, die gleichzeitig Wasser, ein Latex, Kalziumchlorid und einen oberflächenaktiven Stoff enthält.

2. Verfahren nach Anspruch 1, dadurch gekennzeichnet, dass die Verbindung Wasser in einer Menge von 70 bis 80 Gewichtsteilen, ein Latex in einer Menge von 10 bis 20 Teilen an Trockengewicht, Kalziumchlorid in einer Menge von 7 bis 13 Gewichtsteilen und einen oberflächenaktiven Stoff in einer Menge von 0,1 bis 3 Gewichtsteilen enthält.

3. Verfahren nach einem der Ansprüche 1 und 2, dadurch gekennzeichnet, dass man ungefähr einen Liter Verbindung für 3m² Oberfläche des zu behandelnden Bauelements benutzt.

4. Verfahren nach einem der Ansprüche 1 bis 3, dadurch gekennzeichnet, dass der oberflächenaktive Stoff ein quaternäres Ammonium ist.

5. Verfahren nach einem der Ansprüche 1 bis 3, dadurch gekennzeichnet, dass der oberflächenaktive Stoff ein Epoxyd ist.

6. Verfahren nach einem der Ansprüche 1 bis 5, dadurch gekennzeichnet, dass das Latex ein Natur- oder Kunstkautschuk ist.

7. Verfahren nach einem der Ansprüche 1 bis 6, dadurch gekennzeichnet, dass die benutzte Verbindung gewichtsmässig 75 Gewichtsteile Wasser, 10 bis 20 Gewichtsteile Latex, 10 Gewichtsteile Kalziumchlorid und 0,2 bis 2 Gewichtsteile eines quaternären Ammonium enthält.

8. Anti-Salpeter Verbindung wie sie in den Ansprüchen 1, 2 und 4 bis 7 definiert ist.